# EUROPEAN PATENT SPECIFICATION

(11) **EP 2 165 930 B1**
(45) Date de publication et mention de la délivrance du brevet: **19.01.2011**
(21) Numéro de dépôt: 09011475.2
(22) Date de dépôt: 08.09.2009
(51) Int. Cl.: B64C 27/00

(54) **Dispositif sectionneur de câbles**
Trennvorrichtung für Kabel
Cable cutting device

(30) Priorité: 17.09.2008 FR 0805105
(43) Date de publication de la demande: 24.03.2010
(73) Titulaire: EUROCOPTER, 13725 Marignane Cédex (FR)
(72) Inventeur: Claeys, Gérald, 13590 Meyreuil (FR)
(74) Mandataire: GPI & Associés

(56) Documents cités:
- FR-A- 2 443 309
- GB-A- 2 075 940
- US-A- 1 273 287

## Description

La présente invention concerne un dispositif sectionneur de câbles destiné à un aéronef, et plus particulièrement un giravion de type hélicoptère, L'invention se situe alors dans le domaine technique des coupe-câbles d'aéronefs.

Ainsi, le document US1273287 fait partie de l'arrière plan technologique et non pas du domaine technique de l'invention. En effet, ce document met en oeuvre un coupe câble apte à être agencé sur une baïonnette et utilisant uniquement un couteau pivotant pour sectionner lesdits câbles.

En effet, les câbles, tels que des câbles électriques à haute tension ou des câbles téléphoniques, constituent un danger redoutable pour les hélicoptères.

Du fait de la nature de leur mission, les hélicoptères sont amenés à voler à faible altitude et risquent à tout moment d'entrer en collision avec un câble. Même si le pilote de l'hélicoptère est particulièrement attentif, il reste difficile d'apercevoir un câble de un ou deux centimètres de diamètre, par exemple.

Durant un vol d'avancement, l'hélicoptère risque donc de heurter un câble. Dans ce cas de figure, le câble glisse le long du cockpit puis vient en contact avec le mât rotor ou encore le train d'atterrissage ce qui peut conduire à une situation catastrophique.

On note que la majorité des accidents survenus lors de vols à faible altitude résulte d'une collision de l'hélicoptère avec un câble suspendu.

Les hélicoptéristes ont alors mis en oeuvre des dispositifs aptes à sectionner un câble en vol pour protéger leurs hélicoptères en cas de heurt.

On connaît par le document US 4407467 un premier dispositif muni d'une structure à l'avant de l'hélicoptère, cette structure soutenant une pluralité de charges explosives.

Quand l'hélicoptère heurte un câble, ce câble glisse le long de la structure jusqu'à une charge explosive qui explose à son contact pour le sectionner.

Ce premier dispositif répond au besoin mais peut s'avérer dangereux, des éléments métalliques pouvant détériorer l'hélicoptère au moment de l'explosion,

De plus la structure porteuse s'avère lourde, encombrante et très peu aérodynamique.

On connaît par le document WO2006/068507 un deuxième dispositif pour couper les câbles.

Ce deuxième dispositif préconise l'emploi de paires d'électrodes montées sur le fuselage pour couper un éventuel câble.

Ce deuxième dispositif diffère totalement du premier dispositif mais nécessite une installation électrique contraignante.

En outre, ce deuxième dispositif tend à présenter des risques pour le personnel évoluant au sol à proximité de l'aéronef.

On connaît un troisième dispositif par le document US4826103.

Ce troisième dispositif comporte une mâchoire pourvue d'une partie supérieure et d'une partie inférieure qui délimitent une gorge. De plus le troisième dispositif est muni d'un couteau mis en mouvement par une charge explosive pour sectionner un câble dans la gorge.

La présence d'un explosif rend l'utilisation de ce troisième dispositif délicate voire dangereuse ainsi qu'une maintenance relativement lourde.

Enfin, on connaît par le document FR 2443309 un quatrième dispositif destiné à couper un câble se trouvant en état de tension mécanique qui comporte une paire d'arêtes coupantes fixes et coopérantes.

Ces deux arêtes coupantes sont alors disposées de façon à faire entre elles un angle produisant un effet de plan incliné ou de coin tout en présentant une face tranchante à un câble prenant contact avec ces arêtes coupantes.

Ce quatrième dispositif est très efficace pour des câbles d'un diamètre moyen, de l'ordre de onze millimètres, et/ou apte à résister à un effort maximal de l'ordre de quatre vingt mille newtons.

De même, ce quatrième dispositif est efficace à basse vitesse, de vingt à cent vingt cinq kilomètres par heure mais reste limité pour des vitesses supérieures ou Inférieures à cette plage.

La présente invention a alors pour objet de proposer un dispositif apte à sectionner un câble d'un diamètre important, de l'ordre de vingt millimètres par exemple, ceci étant fonction des dimensions relatives des différents composants de l'innovation. De plus, l'objectif de l'invention est aussi d'être efficace dans des conditions extrêmes de vitesses afin d'avoir une application efficace dans le domaine aéronautique.

Selon l'invention, un dispositif sectionneur de câbles, destiné à couper un câble se trouvant en état de tension mécanique, est muni d'une mâchoire comportant une partie supérieure et une partie inférieure qui délimitent toutes deux une gorge. Ce dispositif est de plus pourvu d'une première et d'une deuxième arêtes coupantes fixes et coopérantes agencées à une extrémité aval de la gorge de manière à faire entre elles un angle, pour produire un effet de plan incliné ou de coin tout en présentant une face tranchante à un câble prenant contact avec ces première et deuxième arêtes coupantes

Ce dispositif est remarquable en ce qu'il comporte une lame rotative munie d'un corps ayant un côté effilé coupant, ce corps étant fixé à une partie de la mâchoire, sa partie supérieure ou sa partie inférieure, afin que le côté effilé soit agencé dans la gorge en amont des première et deuxième arêtes coupantes, c'est-à-dire entre l'extrémité amont de la gorge et les première et deuxième arêtes coupantes.

On note que les termes « aval » et « amont » sont définis dans le texte par rapport au sens d'avancement du câble dans la gorge de la mâchoire, un câble parcourant notamment la gorge de son extrémité « amont » vers son extrémité « aval ».

Par conséquent, un câble d'un diamètre adapté, va dans un premier temps entrer en contact avec le côté effilé de la lame rotative.

Cette lame rotative entame alors un mouvement rotatif sous la pression du câble qui se trouve de fait comprimée entre la lame rotative et la partie de la mâchoire à laquelle n'est pas fixée cette lame rotative,

Ce passage du câble contre la lame rotative peut suffire à le sectionner. Dans le cas contraire, à partir d'une certaine rotation angulaire, la lame rotative finit par libérer le câble qui continue sa course.

Dans un second temps, le câble atteint alors les première et deuxième arêtes coupantes disposées au fond de la gorge, Ce câble ayant été partiellement entaillé par la lame rotative, les première et deuxième arêtes coupantes peuvent le sectionner sans difficulté.

Ainsi, les première et deuxième arêtes coupantes sont disposées dans la gorge dans le prolongement de la lame rotative afin que le câble entre en contact avec les première et deuxième arrêtes coupantes après son contact avec la lame rotative.

Ainsi, l'invention permet de sectionner un câble de dimension importante, de l'ordre de vingt millimètres par exemple sans difficulté et indépendamment de la vitesse d'avancement de l'aéronef équipé du dispositif sectionneur de câbles.

Le dispositif selon l'invention comporte en outre une ou plusieurs des caractéristiques additionnelles suivantes.

La lame rotative étant fixée à une partie de la mâchoire du dispositif, au moins une portion du côté effilé de cette lame rotative présente une angulation avec la surface de glissement de l'autre partie de la mâchoire sur laquelle glisse le câble.

Ainsi, on s'assure que le câble va bien mettre en rotation la lame rotative.

Par exemple, le côté effilé comporte alors une zone rectiligne suivie d'une zone en arc de cercle, la zone rectiligne étant située en amont de la zone en arc de cercle.

Afin d'optimiser son encombrement, le corps de la lame rotative peut être au moins partiellement agencé dans un renfoncement d'une partie de la mâchoire, la partie supérieure ou la partie inférieure.

De plus, ce corps est avantageusement fixé à une des parties de la mâchoire par un axe de fixation autour duquel le corps est apte à tourner.

Selon une variante de l'invention, le corps saille partiellement dans la gorge pour présenter un obstacle en amont du le côté effilé de la lame rotative apte à entrer en contact avec un câble.

Un câble de dimension Importante, d'un diamètre supérieur à vingt millimètres par exemple, poussera alors la lame rotative via ledit obstacle sans être comprimé.

Optionnellement, le dispositif comporte aussi un moyen de rappel de la lame rotative apte à maintenir cette lame rotative dans une position initiale en l'absence de câbles.

Ainsi, au repos, la lame rotative est maintenue dans une position initiale par le moyen de rappel,

Quand un câble pousse la lame rotative, cette lame rotative réalise un mouvement rotatif et s'éloigne de sa position initiale. Par contre, lorsque le câble n'est plus en contact avec la lame rotative et se dirige vers les première et deuxième arêtes coupantes, le moyen de rappel repousse la lame rotative dans sa position initiale.

Le corps étant fixé à une des parties de la mâchoire, la partie supérieure ou la partie inférieure, le moyen de rappel est un ressort agencé entre le corps de la lame rotative et la partie de la mâchoire à laquelle le corps est fixé.

Par ailleurs, le dispositif comporte au moins un déflecteur apte à diriger un câble vers la gorge de la mâchoire pour guider un câble vers cette gorge.

Le déflecteur est projeté vers l'avant du dispositif, pour être dirigé vers l'avant de l'aéronef équipé de l'invention.

Avantageusement, un bord d'attaque du déflecteur présente un moyen coupant.

En glissant le long du déflecteur, le câble sera soit découpé soit entaillé par le moyen coupant.

Le moyen coupant peut alors comporter une lame fixe éventuellement munie d'un tranchant en forme de vagues présentant une succession de bosses et de creux.

L'invention et ses avantages apparaîtront avec plus de détails dans le cadre de la description qui suit avec des exemples de réalisation donnés à titre illustratif en référence aux figures annexées qui représentent :
- la figure 1, une coupe schématique d'un hélicoptère muni d'un dispositif sectionneur de câbles. et
- la figure 2, une coupe d'un dispositif sectionneur de câbles selon l'invention dans une position initiale, et,
- les figures 3 à 5 des coupes explicitant le fonctionnement d'un dispositif sectionneur de câbles selon l'invention.

Les éléments présents dans plusieurs figures distinctes sont affectés d'une seule et même référence.

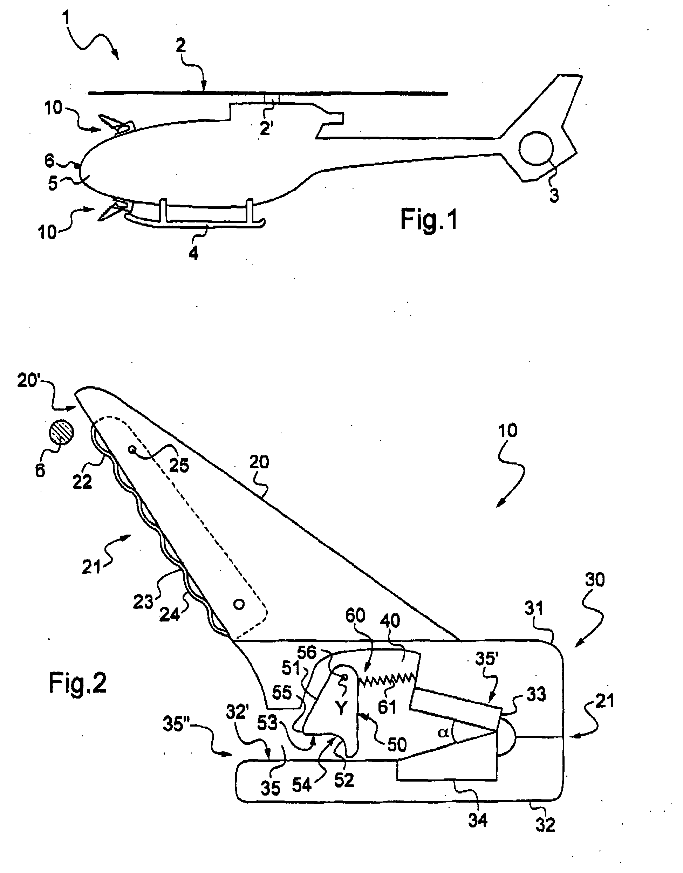

La figure 1 présente un aéronef, plus précisément un hélicoptère 1 muni d'un rotor principal 2 de sustentation et de propulsion et d'un rotor arrière 3.

Le rotor principal 2 est entraîné via une installation motrice par son mât rotor 2'.

Par ailleurs, l'hélicoptère 1 comprend un train d'atterrissage 4 à patins.

Afin d'éviter que le mât rotor 2' et le train d'atterrissage 4 soient heurtés par un câble - suspendu 6 durant un vol d'avancement, l'hélicoptère 1 est équipé de deux dispositifs 10 sectionneurs de câbles agencés au dessus et en dessous de son cockpit 5.

La figure 2 présente un dispositif 10 sectionneur de câbles selon l'invention.

Ce dispositif 10 sectionneur de câbles 6 comporte une mâchoire 30 comprenant une partie supérieure 31 et une partie inférieure 32 reliées uniquement entre elles via une de leurs extrémités.

Ainsi, les parties supérieure 31 et inférieure 32 délimitent, entourent, une gorge 35.

La gorge 35 est borgne et présente donc une extrémité amont 35" qui débouche sur l'extérieur et une extrémité aval 35' qui est obturée par un fond. On remarque que la zone de fixation Z1 de la partie supérieure 31 à la partie inférieure 32 représente le fond de la gorge 35.

On note que la mâchoire schématisée présente une partie supérieure 31 et une partie inférieure 32 distincte, liées l'une à l'autre par une de leurs extrémités au niveau de la zone de fixation Z1. Néanmoins, on comprend bien que les parties supérieure et inférieure peuvent être réalisées à partir d'un même bloc de matière pour constituer un ensemble monobloc.

Afin d'être à même de sectionner un câble 6, la mâchoire comporte une première et une deuxième arêtes coupantes 33, 34 respectivement solidarisées aux parties supérieure 31 et inférieure 32 de manière à présenter un angle α entre elles,

Ces première et deuxième arêtes coupantes sont en saillie dans la gorge 35, plus précisément à l'extrémité aval 35' de la gorge 35, et donc à proximité du fond de la gorge 35.

Pour optimiser ces première et deuxième arêtes coupantes 33, 34, l'homme du métier peut se référer à la littérature existante, et notamment l'art antérieur décrit précédemment.

Outre les première et deuxième arêtes coupantes 33, 34, la mâchoire 30 du dispositif 10 sectionneur de câbles est muni d'une lame rotative 50.

Cette lame rotative 50 comporte un corps 51 ayant un côté effilé 52, à savoir une section coupante.

Par suite, le corps 51 est inséré dans un renfoncement 40 ménagé dans une partie de la mâchoire 30, à savoir dans la partie supérieure 31 de cette mâchoire 30 selon le mode de réalisation présenté sur la figure 2.

Le corps 51 est alors fixé à la partie supérieure 31 de la mâchoire 30 via un axe de rotation 56 qui traverse ladite partie supérieure 31 et ladite mâchoire. Ainsi, la lame rotative est à même d'effectuer une rotation autour de l'axe de rotation 56 selon une direction Y sensiblement normale à la gorge 35, à savoir selon la direction de l'épaisseur de la mâchoire.

On constate que, le corps 51 de la lame rotative 50 étant fixé à l'intérieur d'un renfoncement 40 de la partie supérieure de la mâchoire 30, le côté effilé 52 est disposé dans la gorge 35, du moins avant qu'un câble ne vienne en contact avec le dispositif 10 et donc lorsque la lame rotative se trouve dans la position initiale schématisée sur la figure 2.

Plus exactement, la lame rotative 50 est agencée dans la gorge 35 en amont des première et deuxième arêtes coupantes, ces première et deuxième arêtes coupantes se situant de fait dans le prolongement de la lame rotative 50.

Pour maintenir la lame rotative dans sa position initiale en l'absence de câbles, la mâchoire 30 comporte un moyen de rappel 60.

Ce moyen de rappel possède un ressort 61, agencé dans le renfoncement 40, solidarisé au corps 51 de la lame rotative à la partie supérieure 31 de la mâchoire à laquelle ce corps 51 est fixé.

Le ressort 61 du moyen de rappel exerce un effort sur le corps 51 pour maintenir la lame rotative 50 dans sa position initiale, c'est à dire une position où le côté effilé 52 est dirigé vers l'extrémité amont 35" de la gorge 35 et non pas vers les première et deuxième arêtes coupantes 33, 34,

Afin d'optimiser le dispositif 10, et de garantir son bon fonctionnement, au moins une portion du côté effilé 52 de la lame rotative 50 présente une angulation avec la surface de glissement 32' de la partie de la mâchoire à laquelle le corps 51 de la lame rotative n'est pas fixé.

Par exemple, le côté effilé 52 présente alors successivement, de l'extrémité, amont 35" de la gorge 35 vers son extrémité aval 35', une zone rectiligne 53 suivie d'une zone sensiblement en arc de cercle 54.

Enfin, on remarque que le corps 51 saille du renfoncement 40 dans la gorge 35 afin que la partie avant du côté effilé constitue un obstacle 55 en amont de ce côté effilé 52.

Le dispositif 10 sectionneur de câbles possède donc une mâchoire munie dans sa gorge 35 d'une lame rotative apte à entailler, voire à couper, un câble, puis dans son prolongement une première et une deuxième arêtes coupantes présentant un angle α entre elles.

Cependant, pour guider un câble vers sa gorge 35; le dispositif 10 est avantageusement pourvu d'un déflecteur 20 dirigé vers l'avant de l'hélicoptère 1.

Ainsi, le déflecteur 20 guide un potentiel câble suspendu vers la gorge 35 de la mâchoire 30, afin que ce câble soit sectionné.

De plus, on remarque la présence d'un moyen coupant 21 optionnel agencé au bord d'attaque 20' de ce déflecteur, Ce moyen coupant a pour but soit de sectionner le câble soit de l'entailler en fonction des caractéristiques physiques dudit câble.

En référence à la figure 2, le moyen coupant 21 peut consister en une lame fixe, enfoncée partiellement dans une rainure du déflecteur 20 et fixé à ce déflecteur 20 via des moyens usuels 25, pourvue d'un tranchant 22 coupant. En option et en référence à la figure 2, ce tranchant 22 peut comporter une succession de creux 23 et de bosses 24.

Il convient désormais d'expliciter le fonctionnement du dispositif 10 en présence d'un câble.

Trois cas sont à distinguer en fonction du diamètre du câble. Ainsi, on étudiera le fonctionnement du dispositif avec un câble d'un diamètre faible à savoir inférieur à 11 millimètres, avec un câble d'un diamètre moyen compris entre 11 et 20 millimètres, puis avec un câble d'un diamètre important supérieur à 20 millimètres, toutes ces valeurs étant données à titre d'exemple en fonction des dimensions relatives des différents composants de l'invention.

Quel que soit le diamètre, le déflecteur 20 guide le câble 6 vers la gorge 35 de la mâchoire. Toutefois, ce déflecteur comportant un moyen coupant 21, le câble 6 sera soit sectionné avant d'atteindre la gorge 35 soit entaillé.

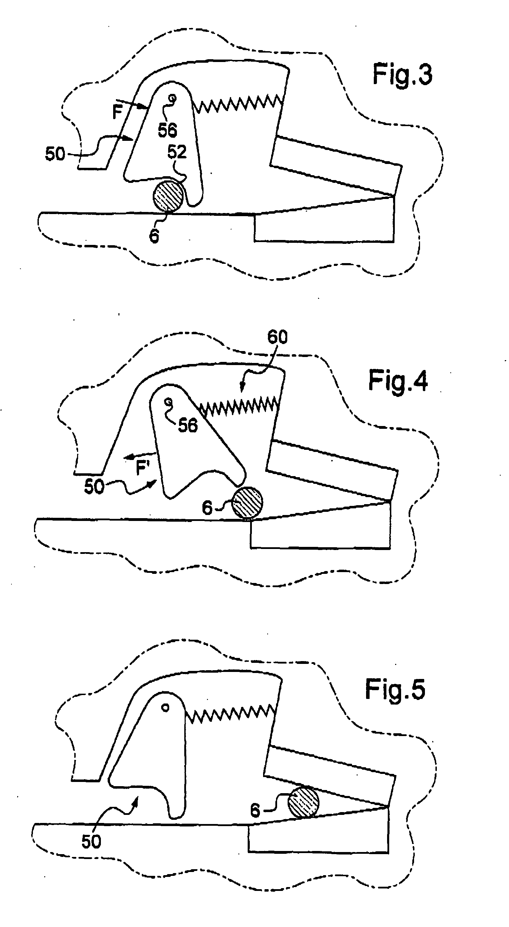

Les figures 3 à 5 décrivent le fonctionnement du dispositif 10, et surtout de sa mâchoire 30 avec un câble 6 d'un diamètre moyen,

Une fois dans la gorge 35, le câble 6 entre en contact avec le côté effilé 52 de la lame rotative 50.

En référence à la figure 3, cette lame rotative 50, poussée par le câble 6, effectue un mouvement rotatif dans le sens senestrorsum selon la flèche F. La lame rotative 50 quitte alors sa position initiale schématisée sur la figure 2.

La lame rotative 50 comprime alors le câble 6 entre le côté effilé 52 et la surface de glissement 32' de la mâchoire inférieure 32. On comprend qu'au fur et à mesure de l'avancement du câble 6 dans la gorge 35, la compression du câble 6 augmente jusqu'à un maximum puis décroit.

Durant cette phase de compression, la lame rotative 50 cisaille fortement le câble 6, voire même le sectionne.

En référence à la figure 4, si le câble 6 n'est pas sectionné à l'issue de la phase de compression, il continue sa course et n'est donc plus comprimé par la lame rotative 50.

Cette lame rotative 50 n'est plus poussée par le câble 6 et retourne donc dans sa position initiale sous l'action du moyen de rappel 60 qui la force à effectuer un mouvement rotatif autour de son axe de rotation 56 dans le sens dextrorsum selon la flèche F'.

En référence à la figure 5, le câble 6 atteint finalement les première et deuxième arêtes coupantes 33, 34 qui peuvent aisément le sectionner dans la mesure où le câble 6 a été entaillé d'une part par le moyen coupant du déflecteur 20 et, d'autre part par la lame rotative 50.

Lorsque le câble 6 a un diamètre faible, inférieur à 11 millimètres par exemple, une fois dans la gorge 35, ce câble 6 entre en contact avec le côté effilé 52 de la lame rotative 50, plus précisément sa zone en arc de cercle 52.

Comme précédemment, la lame rotative effectue un mouvement rotatif dans le sens senestrorsum. Toutefois, compte tenu de son faible diamètre, la lame rotative ne le comprime pas et ne peut par suite pas le sectionner.

Cependant, le câble 6 va poursuivre sa course et va finir par être coupé par les première et deuxième arêtes coupantes 33, 34.

De même, quand un câble d'un diamètre important se présente dans la gorge 35, Il heurte l'obstacle 55 de la lame rotative 50, à savoir la partie avant de la lame rotative,

Ce câble va alors entraîner la rotation de la lame rotative 50 sans être en contact avec le côté effilé 52 de cette lame rotative 50.

Comme précédemment, le câble 6 va poursuivre sa course pour être sectionné via les première et deuxième arêtes coupantes 33, 34.

Enfin, afin de solidariser le dispositif 10 sectionneur de câbles à la structure d'un aéronef, on fixe la partie inférieure 32 de la mâchoire 30 à cette structure via des moyens usuels.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles, Il est bien sûr envisageable de remplacer un moyen décrit par un moyen équivalent sans sortir du cadre de la présente invention qui est définie uniquement par le texte des revendications.

## Revendications

1. Dispositif (10) sectionneur de câbles (6) muni d'une mâchoire (30) comportant une partie supérieure (31) et une partie inférieure (32) qui délimitent toutes deux une gorge (35), ledit dispositif (10) étant pourvu d'une première et d'une deuxième arêtes coupantes (33, 34) fixes et coopérantes agencées à une extrémité aval (35') de ladite gorge (35) de manière à faire entre elles un angle (α),
**caractérisé en ce qu'**il comporte une lame rotative (50) munie d'un corps (51) ayant un côté effilé (52) coupant, ledit corps (51) étant fixé à une partie (31, 32) de ladite mâchoire (30) afin que ledit côté effilé (52) soit agencé dans ladite gorge (35) en amont desdites première et deuxième arêtes coupantes (33, 34), lesdits première et deuxième arêtes coupantes (33, 34) étant disposées dans ladite gorge (35) dans le prolongement de ladite lame rotative (50).

2. Dispositif selon la revendication 1,
**caractérisé en ce que** ledit corps (51) est au moins partiellement agencé dans un renfoncement (40) d'une partie (31, 32) de ladite mâchoire (30).

3. Dispositif selon l'une quelconque des revendications précédentes,
**caractérisé en ce que** ledit corps (51) est fixé à une desdites parties (31, 32) de ladite mâchoire (30) par un axe de fixation (56) autour duquel ledit corps (51) est apte à tourner.

4. Dispositif selon l'une quelconque des revendications précédentes.
**caractérisé en ce que** la lame rotative (50) étant fixée à une partie (31) de la mâchoire (30) du dispositif (10), au moins une portion (54) du côté effilé (52) de cette lame rotative (50) présente une angulation avec la surface de glissement (32') de l'autre partie (32) de la mâchoire (30) sur laquelle glisse le câble (6).

5. Dispositif selon l'une quelconque des revendications précédentes,
**caractérisé en ce que** ledit côté effilé (52) comporte une zone rectiligne (53) suivie d'une zone en arc de cercle (54), la zone rectiligne (53) étant située en amont de la zone en arc de cercle (54),

6. Dispositif selon l'une quelconque des revendications précédentes,
**caractérisé en ce que** ledit corps (51) saille partiellement dans ladite gorge (35) pour présenter un obstacle (55) en amont dudit côté effilé (52) apte à entrer un contact avec un câble (6).

7. Dispositif selon l'une quelconque des revendications précédentes,
**caractérisé en ce qu'**il comporte un moyen de rappel (60) de ladite lame rotative (50) apte à maintenir cette lame rotative (50) dans une position initiale en l'absence de câbles (6).

8. Dispositif selon la revendication 7,
**caractérisé en ce que**, ledit corps (51) étant fixé à une desdites parties (31, 32) de la mâchoire (30), ledit moyen de rappel est un ressort (61) agencé entre ledit corps (51) de la lame rotative (50) et la partie (31, 32) de la mâchoire (30) à laquelle le corps (51) est fixé.

9. Dispositif selon l'une quelconque des revendications précédentes,
**caractérisé en ce qu'**il comporte au moins un déflecteur (20) apte à diriger un câble (6) vers ladite gorge (35).

10. Dispositif selon la revendication 9,
**caractérisé en ce qu'**un bord d'attaque (20') dudit déflecteur (20) présente un moyen coupant (21).

11. Dispositif selon la revendication 10,
**caractérisé en ce que** ledit moyen coupant (21) comporte une lame fixe munie d'un tranchant (22) en forme de vagues présentant une succession de bosses (24) et de creux (23).

## Claims

1. Device (10) for cutting through cables (6), the device being provided with a jaw (30) having a top part (31) and a bottom part (32) which together define a throat (35), said device (10) being provided with first and second stationary and co-operating sharp edges (33, 34) arranged at a downstream end (35') of said throat (35) so as to form an angle (α) between each other,
**characterised in that** the device includes a rotary blade (50) provided with a body (51) having a sharp tapering side (52), said body (51) being fastened to one part (31, 32) of said jaw (30) so that said tapering side (52) is arranged in said throat (35) upstream from said first and second sharp edges (33, 34), said first and second sharp edges (33, 34) being located in said throat (35) in line with said rotary blade (50).

2. Device according to Claim 1,
**characterised in that** said body (51) is arranged at least in part in a setback (40) of one part (31, 32) of said jaw (30).

3. Device according to any one of the preceding claims,
**characterised in that** said body (51) is fastened to one of said parts (31, 32) of said jaw (30) by a fastening pin (56) about which said body (51) is able to rotate.

4. Device according to any one of the preceding claims,
**characterised in that** with the rotary blade (50) being fastened to one part (31) of the jaw (30) of the device (10), at least a portion (54) of the tapering side (52) of said rotary blade (50) presents an angle relative to the sliding surface (32') of the other part (32) of the jaw (30) on which the cable (6) slides.

5. Device according to any one of the preceding claims,
**characterised in that** said tapering side (52) includes a straight zone (53) followed by a circularly arcuate zone (54), the straight zone (53) being situated upstream from the circularly arcuate zone (54).

6. Device according to any one of the preceding claims,
**characterised in that** said body (51) projects in part into said throat (35) to present an obstacle (55) upstream from said tapering side (52) that is suitable for coming into contact with a cable (6).

7. Device according to any one of the preceding claims,
**characterised in that** it includes a return means (60) for returning said rotary blade (50) and suitable for keeping said rotary blade (50) in an initial position, in the absence of cables (6).

8. Device according to Claim 7,
**characterised in that** with said body (51) being fastened to one of said parts (31, 32) of the jaw (30), said return means is a spring (61) arranged between said body (51) of the rotary blade (50) and the part (31, 32) of the jaw (30) to which the body (51) is fastened.

9. Device according to any one of the preceding claims,
**characterised in that** it includes at least one deflector (20) suitable for directing a cable (6) towards said throat (35).

10. Device according to Claim 9,
**characterised in that** a leading edge (20`) of said deflector (20) presents a cutting means (21).

11. Device according to Claim 10,
**characterised in that** said cutting means (21) comprises a stationary blade provided with a cutting edge (22) in the form of waves, presenting a succession of projections (24) and of recesses (23).

## Patentansprüche

1. Vorrichtung (10) zum Trennen von Kabeln (6) mit einer Klaue (30), die einen oberen Teil (31) und einen unteren Teil (32) aufweist, die beide einen Schlund (35) eingrenzen, wobei die Vorrichtung (10) mit einer ersten und einer zweiten Schneidkante (33, 34) versehen ist, die an dem stromabgelegenen Ende (35') des Schlundes (35) befestigt und zusammenwirkend so angeordnet sind, dass sie zwischen sich einen Winkel (□) einschließen, **gekennzeichnet durch** eine drehbare Klinge (50), die mit einem Körper (51) versehen ist, der eine angespitzte Schneidseite (52) aufweist, wobei der Körper (51) an einem Teil (31, 32) der Klaue (30) befestigt ist, sodass die angespitzte Seite (52) in dem Schlund (35) stromauf bezüglich der ersten und beiden Schneidkanten (33, 34) angeordnet ist, wobei die ersten und zweiten Schneidkanten (33, 34) in dem Schlund (35) in der Verlängerung der drehbaren Klinge (50) angeordnet sind.

2. Vorrichtung nach Anspruch 1,
**dadurch gekennzeichnet, dass** der Körper (51) zumindest teilweise in einer Vertiefung (40) eines Teils (31, 32) der Klaue (30) angeordnet ist.

3. Vorrichtung nach einem der vorstehenden Ansprüche,
**dadurch gekennzeichnet, dass** der Körper (51) mit einer Befestigungsachse (56) an einem der Teile (31, 32) der Klaue (30) befestigt ist, um die der Körper (51) drehbar ist.

4. Vorrichtung nach einem der vorstehenden Ansprüche,
**dadurch gekennzeichnet, dass** die drehbare Klinge (50) an einem Teil (31) der Klaue (30) der Vorrichtung (10) befestigt ist, wobei mindestens ein Bereich (54) der angespitzten Seite (52) dieser drehbaren Klinge (50) gegenüber der Gleichfläche (32' ) des anderen Teils (32) der Klaue (30), auf der das Kabel (6) gleitet, angewinkelt ist.

5. Vorrichtung nach einem der vorstehenden Ansprüche,
**dadurch gekennzeichnet, dass** die angespitzte Seite (52) einen gradlinigen Bereich (53), gefolgt von einem kreissegmentförmigen Bereich (54) aufweist, wobei der gradlinige Bereich (53) stromauf zum kreissegmentförmigen Bereich (54) liegt.

6. Vorrichtung nach einem der vorstehenden Ansprüche,
**dadurch gekennzeichnet, dass** der Körper (51) teilweise in den Schlund (35) übersteht, um ein Hindernis (55) stromauf zur angespitzten Seite (52) zu bilden, welches mit einem Kabel (6) in Kontakt treten kann.

7. Vorrichtung nach einem der vorstehenden Ansprüche,
**dadurch gekennzeichnet, dass** sie ein Rückholmittel (60) der drehbaren Klinge (50) aufweist, die diese drehbare Klinge (50) in Abwesenheit eines Kabels (6) in seine ursprüngliche Position zurückführen kann.

8. Vorrichtung nach Anspruch 7,
**dadurch gekennzeichnet, dass** der Körper (51) an einem der besagten Teile (31, 32) der Klaue (30) befestigt ist und das Rückholmittel eine Feder (61) ist, die zwischen dem Körper (51) der drehbaren Klinge (50) und dem Teil (31, 32) der Klaue (30) angeordnet ist, an dem der Körper (51) befestigt ist.

9. Vorrichtung nach einem der vorstehenden Ansprüche,
**dadurch gekennzeichnet, dass** er mindestens einen Deflektor (20) aufweist, der ein Kabel (6) auf den Schlund (35) zu leiten kann.

10. Vorrichtung nach Anspruch 9,
**dadurch gekennzeichnet, dass** eine Angriffskante (20') des Deflektors (20) ein Schneidmittel (21) aufweist.

11. Vorrichtung nach Anspruch 10,
**dadurch gekennzeichnet, dass** das Schneidmittel (21) eine feste Klinge aufweist mit einer Schneidfläche (22) in Wellenform, die eine Aufeinanderfolge von Bergen (24) und Tälern (23) aufweist.
